# EUROPEAN PATENT APPLICATION

(11) **EP 3 627 904 A1**
(43) Date of publication of application: **25.03.2020**
(21) Application number: 17911943.3
(22) Date of filing: 02.06.2017
(51) Int. Cl.: H04W 52/02

(54) **DISCONTINUOUS RECEPTION METHOD, TERMINAL DEVICE AND NETWORK DEVICE**

(71) Applicant: GUANGDONG OPPO MOBILE TELECOMMUNICATIONS CORP., LTD., Wusha, Chang'an Dongguan, Guangdong 523860 (CN)
(72) Inventor: ZHANG, Zhi, Dongguan Guangdong 523860 (CN)
(74) Representative: Manitz Finsterwald Patent- und Rechtsanwaltspartnerschaft mbB
(86) International application number: PCT/CN2017/087074
(87) International publication number: WO 2018/218683

(57) **Abstract**

Disclosed in the present application are a discontinuous reception method, a terminal device and a network device. The method comprises: a terminal device determining at least one set of DRX parameters; the terminal device determining, according to the at least one set of DRX parameters, a target time-frequency resource for monitoring a control channel; and the terminal device monitoring the control channel on the target time-frequency resource. In this way, the terminal device determines, on the basis of multiple sets of DRX parameters, a target time-frequency resource for monitoring the control channel, so that the terminal device, when transmitting data on the basis of different basic parameter sets, can also simultaneously satisfy low power consumption requirements and signal monitoring requirements.

## Description

### TECHNICAL FIELD

Embodiments of the present disclosure relate to the field of wireless communication, and more particularly, to a discontinuous reception method, a terminal device and a network device.

### BACKGROUND

In order to solve the problem of power consumption of a terminal device and ensure that the terminal can monitor data sent by a network device in time, it is now possible to meet requirements of low power consumption and signal monitoring as much as possible through a discontinuous reception (DRX). The DRX mode allows the terminal device to enter a sleep mode periodically in some time periods without monitoring a physical downlink control channel (PDCCH), and wakes up from the sleep mode when the PDCCH needs to be monitored, so as to save power.

In a long term evolution (LTE) system, if the DRX function is configured for a terminal device, the network device configures a set of DRX parameters for the terminal device, such as an on duration time, an inactivity time, a short DRX cycle, a long DRX cycle, and so on. The terminal device may determine when to monitor the PDCCH according to those DRX parameters. However, a 5G system supports multiple numerologies (e.g., supporting multiple different subcarrier spacing), time-frequency resources for the terminal device to monitor the PDCCH may be constantly changed, and the old DRX mode can not meet the data monitoring requirement of the terminal device. Therefore, a more flexible DRX scheme is urgently needed to meet the low power consumption requirement and the signal monitoring requirement of the terminal device when performing data transmission based on different numerologies (basic parameter sets).

### SUMMARY

Embodiments of the present disclosure provides a discontinuous reception method, a terminal device and network device, which can meet low power consumption requirement and signal monitoring requirement of a terminal device when performing data transmission based on different numerologies.

In a first aspect, there is provided a discontinuous reception method, including: determining, by a terminal device, at least one set of DRX parameters; determining, by the terminal device, a target time-frequency resource for monitoring a control channel according to the at least one set of DRX parameters; and monitoring, by the terminal device, the control channel on the target time-frequency resource.

Therefore, the terminal device determines the target time-frequency resource for monitoring the control channel based on a plurality of sets of DRX parameters together, so that the terminal device can simultaneously meet the low power consumption requirement and the signal monitoring requirement when performing data transmission based on different numerologies.

Optionally, determining by the terminal device a target time-frequency resource for monitoring a control channel according to the at least one set of DRX parameters includes: determining, by the terminal device, at least one time-frequency resource set for monitoring the control channel according to the at least one set of DRX parameters, wherein the at least one set of DRX parameters correspond to the at least one time-frequency resource set one to one; and determining, by the terminal device, the target time-frequency resource according to the at least one time-frequency resource set, wherein the target time-frequency resource includes the at least one time-frequency resource set.

Optionally, in the at least one time-frequency resource set, if a time-domain resource range of a first time-frequency resource in a first time-frequency resource set includes a time-domain resource range of a second time-frequency resource in a second time-frequency resource set, the time-domain resource range of the second time-frequency resource is adjusted to the time-domain resource range of the first time-frequency resource.

That is, when the time domain resource ranges of different time-frequency resources in different time-frequency resource sets completely overlap, the smaller time domain resource range should be adjusted to be equal to the larger time domain resource range, i.e., the time domain resource range is based on the larger time domain resource range.

Optionally, each set of DRX parameters in the at least one set of DRX parameters include at least one of the following parameters: an on duration time, an inactivity time, a retransmission time, a short DRX cycle, a long DRX cycle and a frequency monitoring range, wherein the frequency monitoring range represents a range of a frequency domain resource for monitoring the control channel.

In this embodiment, the terminal device may monitor the control channel only within a preset frequency domain resource range instead of monitoring the control channel on the full frequency band, and such method can flexibly adapt signal transmission based on different numerologies, such as different subcarrier spacing, and meanwhile, the monitoring complexity for the terminal device is reduced.

Optionally, each set of DRX parameters include one or more frequency monitoring ranges, and the frequency monitoring ranges are discontinuous in frequency domain.

Optionally, determining, by terminal device, at least one set of DRX parameters includes: determining, by the terminal device, the at least one set of DRX parameters corresponding to at least one numerology according to at least one used numerology and a correspondence between multiple numerologies and multiple sets of DRX parameters.

Optionally, determining, by the terminal device, at least one set of DRX parameters includes: receiving, by the terminal device, indication information sent by a network device, wherein the indication information is used for indicating the at least one set of DRX parameters.

Optionally, the indication information is a medium access control element (MAC CE) or downlink control information (DCI).

In a second aspect, there is provided a discontinuous reception method, including: determining, by a network device, at least one set of DRX parameters; determining, by the network device, a target time-frequency resource for sending a control channel according to the at least one set of DRX parameters; and sending, by the network device, the control channel to a terminal device on the target time-frequency resource.

Therefore, the network device determines the target time-frequency resource for sending the control channel based on a plurality of sets of DRX parameters together, so that the terminal device can correctly monitor the control channel according to the plurality of sets of DRX parameters. In this way, both the low power consumption requirement and the signal monitoring requirement when performing data transmission based on different numerologies can be met.

Optionally, determining, by the network device, a target time-frequency resource for sending a control channel according to the at least one set of DRX parameters includes: determining, by the network device, at least one time-frequency resource set for sending the control channel according to the at least one set of DRX parameters, wherein the at least one set of DRX parameters correspond to the at least one time-frequency resource set one to one; and determining, by the network device, the target time-frequency resource according to the at least one time-frequency resource set, wherein the target time-frequency resource includes the at least one time-frequency resource set.

Optionally, in the at least one time-frequency resource set, if a time-domain resource range of a first time-frequency resource in a first time-frequency resource set includes a time-domain resource range of a second time-frequency resource in a second time-frequency resource set, the time-domain resource range of the second time-frequency resource is adjusted to the time-domain resource range of the first time-frequency resource.

That is, when the time domain resource ranges of different time-frequency resources in different time-frequency resource sets completely overlap, the smaller time domain resource range should be adjusted to be equal to the larger time domain resource range, i.e., the time domain resource range is determined by the larger time domain resource range.

Optionally, each set of DRX parameters in the at least one set of DRX parameters include at least one of the following parameters: an on duration time, an inactivity time, a retransmission time, a short DRX cycle, a long DRX cycle and a frequency monitoring range, wherein the frequency monitoring range represents a range of a frequency domain resource for monitoring the control channel.

In this embodiment, the terminal device may monitor the control channel only within a preset frequency domain resource range instead of monitoring the control channel on the full frequency band. This method can flexibly adapt signal transmission based on different numerologies, such as different subcarrier spacing, and meanwhile, the monitoring complexity for the terminal device is reduced.

Optionally, each set of DRX parameters include one or more frequency monitoring ranges, and the frequency monitoring ranges are discontinuous in frequency domain.

Optionally, determining, by the network device, at least one set of DRX parameters includes: determining, by the network device, the at least one set of DRX parameters corresponding to at least one numerology according to at least one used numerology and a correspondence between multiple numerologies and multiple sets of DRX parameters.

Optionally, the method further includes: the network device sending indication information to the terminal device, wherein the indication information is used for indicating the at least one set of DRX parameters.

Optionally, the indication information is a medium access control element (MAC CE) or downlink control information (DCI).

In a third aspect, there is provided a terminal device, which may perform operations of the terminal device in the first aspect or any optional implementation manner of the first aspect described above. In particular, the terminal device may include modules or units for performing the operations of the terminal device in the first aspect or any optional implementation manner of the first aspect described above.

In a fourth aspect, there is provided a network device, which may perform the operations of the network device in the second aspect or any optional implementation manner of the second aspect described above. In particular, the network device may include modules or units for performing the operations of the network device in the second aspect or any optional implementation manner of the second aspect described above.

In a fifth aspect, there is provided a terminal device, including: a processor, a transceiver, and a memory. The processor, the transceiver and the memory communicate with each other via an internal connection path. The memory stores instructions, and the processor is configured to execute the instructions stored in the memory. When the processor executes the instructions stored in the memory, the execution causes the terminal device to perform the methods of the first aspect or any possible implementation manner of the first aspect, or the execution causes the terminal device to implement the terminal device provided by the third aspect.

In a sixth aspect, a network device is provided including: a processor, a transceiver, and a memory. The processor, the transceiver and the memory communicate with each other via an internal connection path. The memory stores instructions, and the processor is configured to execute the instructions stored in the memory. When the processor executes the instructions stored in the memory, the execution causes the network device to perform the methods of the second aspect or any possible implementation manner of the second aspect, or the execution causes the network device to implement the network device provided by the fourth aspect.

In a seventh aspect, there is provided a computer storage medium for storing a program, wherein the program causes a terminal device execute the methods for sending information of the first aspect or any possible implementation manner of the first aspect.

In an eighth aspect, there is provided a computer storage medium for storing a program, wherein the program causes a network device execute the method for sending information of the second aspect or any possible implementation manner of the second aspect.

In a ninth aspect, there is provided a system chip, including an input interface, an output interface, a processor and a memory, wherein the processor is configured to execute instructions stored in the memory, and when the instructions are executed, the processor may implement any one of the methods of the first aspect and various implementations thereof.

In a tenth aspect, there is provided a system chip, including an input interface, an output interface, a processor and a memory, wherein the processor is configured to execute instructions stored in the memory, and when the instructions are executed, the processor may implement any one of the methods of the second aspect and various implementations thereof.

In an eleventh aspect, there is provided a computer program product including instructions. When run on a computer, the instructions cause the computer to perform the methods of the first aspect or any possible implementation manner of the first aspect.

In a twelfth aspect, there is provided a computer program product including instructions. When run on a computer, the instructions cause the computer to perform the methods of the second aspect or any possible implementation manner of the second aspect.

### BRIEF DESCRIPTION OF THE DRAWINGS

FIG. 1 is a schematic architecture diagram of an application scenario of an embodiment of the present disclosure.
FIG. 2 is a schematic diagram of monitoring PDCCH by using a DRX mode.
FIG. 3 is a schematic flow chart of a discontinuous reception method of an embodiment of the present disclosure.
FIG. 4 is a schematic diagram of time-frequency resources for monitoring a control channel determined by a set of DRX parameters.
FIG. 5 is a schematic flow chart of a discontinuous reception method of an embodiment of the present disclosure.
FIG. 6 (a) is a schematic diagram of a first time-frequency resource set determined according to a first set of DRX parameters.
FIG. 6 (b) is a schematic diagram of a second time-frequency resource set determined according to a second set of DRX parameters.
FIG. 6 (c) is a schematic diagram of target time-frequency resources determined according to two sets of DRX parameters.
FIG. 7 (a) is a schematic diagram of a first time-frequency resource set determined according to a first set of DRX parameters.
FIG. 7 (b) is a schematic diagram of a second time-frequency resource set determined according to a second set of DRX parameters.
FIG. 7 (c) is a schematic diagram of target time-frequency resources determined according to two sets of DRX parameters.
FIG. 8 (a) is a schematic diagram of a first time-frequency resource set determined according to a first set of DRX parameters.
FIG. 8 (b) is a schematic diagram of a second time-frequency resource set determined according to a second set of DRX parameters.
FIG. 8 (c) is a schematic diagram of target time-frequency resources determined according to two sets of DRX parameters.
FIG. 9 is a schematic flow chart of a discontinuous reception method of an embodiment of the present disclosure.
FIG. 10 is a schematic block diagram of a network device of an embodiment of the present disclosure.
FIG. 11 is a schematic block diagram of a terminal device of an embodiment of the present disclosure.
FIG. 12 is a schematic structural diagram of a network device of an embodiment of the present disclosure.
FIG. 13 is a schematic structural diagram of a terminal device of an embodiment of the present disclosure.
FIG. 14 is a schematic structural diagram of a system chip of an embodiment of the present disclosure.

### DETAILED DESCRIPTION

The technical solutions in the embodiments of the present disclosure will be described below with reference to the accompanying drawings.

It should be understood that the technical solutions of the embodiments of the present disclosure can be applied to various communication systems, such as a global system of mobile communication (GSM) system, a code division multiple access (CDMA) system, and a wideband code division multiple access (WCDMA) system, a long term evolution (LTE) system, a LTE frequency division duplex (FDD) system, a LTE time division duplex (TDD), an universal mobile telecommunication system (UMTS), a future 5G communication systems and the like.

Various embodiments are described herein in connection with a terminal device. The terminal may be also referred to as a user equipment (UE), an access terminal, a subscriber unit, a subscriber station, a mobile station, mobile equipment, a remote station, a remote terminal, a mobile device, a user terminal, a terminal, a wireless communication device, a user agent, or a user device. The access terminal may be a cellular phone, a cordless phone, a session initiation protocol (SIP) phone, a wireless local loop (WLL) station, a personal digital assistant (PDA), a handheld device with a wireless communication capability, a computing devices or other processing devices connected to wireless modems, an in-vehicle device, a wearable device, a terminal device in a future 5G networks, or a terminal device in a future evolutional public land mobile network (PLMN), and so on.

Various embodiments are described herein in connection with a network device. The network device may be a device for communicating with the terminal device, for example, the network device may be a base transceiver station (BTS) in the GSM system or the CDMA system, or a node base (NodeB, NB) in the WCDMA system, or an evolutional node base (eNB or eNodeB) in the LTE system, or the network device may be a relay station, an access point, an in-vehicle device, a wearable device, and a network side device in a future 5G network or a network side device in a future evolutional PLMN network.

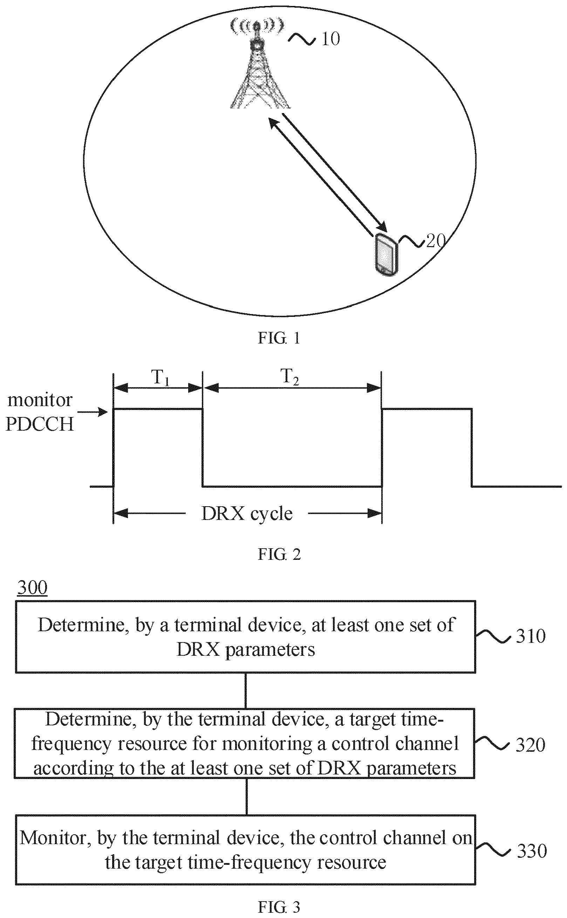

FIG. 1 is a schematic view of an application scenario of an embodiment of the present disclosure. A communication system in FIG. 1 may include a network device 10 and a terminal device 20. The network device 10 is configured to provide communication services for the terminal device 20 and access the core network. The terminal device 20 can access the network by searching for synchronization signals, broadcast signals, and the like sent by the network device 10, thereby performing communications with the network. Arrows shown in FIG. 1 may represent uplink/downlink transmissions by a cellular link between the terminal device 20 and the network device 10.

The network in the embodiments of the present disclosure may refer to a public land mobile network (PLMN) or a device to device (D2D) network or a machine to machine/man (M2M) network or other networks, and FIG. 1 is a simplified schematic diagram for example, and other terminal devices may be included in the network, which are not shown in FIG. 1.

Due to discontinuity of data transmission, it is impossible for the terminal device to monitor a data scheduling instruction (i.e. a control channel in LTE, such as PDCCH) of the network device all the time, or else power consumption is too large. In order to reduce the power consumption of the terminal device and ensure that the terminal can monitor the data sent by the network device in time, the power consumption and the signal monitoring can be balanced through a DRX mode. The network device may configure the terminal device to "wake up"(or called as DRX ON) within a time period predicted by the network device, and the terminal device monitors the PDCCH. The network device may also configure the terminal device to "sleep"(or called as DRX OFF) within a time period predicted by the network device, during which the terminal device does not monitor the PDCCH. Thus, if the network device has data to send to the terminal device, the network device can schedule the terminal device to wake up to monitor the PDCCH during the DRX ON time of the terminal device, and reduce the power consumption of the terminal device during the DRX OFF time. The DRX has different operation methods according to different radio resource control (RRC) modes adopted by the terminal device, such as RRC-CONNECTED mode or RRC-IDLE mode. The DRX method in the embodiments of the present disclosure is only for the DRX in the RRC-CONNECTED mode (C-DRX for short). In the C-DRX mode, the network device manages the DRX ON and DRX OFF states of the terminal device by configuring a series of timers.

As shown in the schematic diagram of monitoring PDCCH by using the DRX mode in FIG. 2, the terminal device is in an awake state during the period of T₁, and may monitor the control channel such as PDCCH. The terminal device is in a sleep state in the period of T₂ and dose not monitor the PDCCH, so that the power consumption can be reduced. As can be seen from FIG. 2, the longer T₂ is, the lower the power consumption of the terminal device will be.

If the terminal device is configured with the DRX function, the network device may configure a set of DRX parameters for the terminal device, for example, parameters including an on duration time, an inactivity time, a short DRX cycle, a long DRX cycle, etc., and the terminal device may determine when to monitor the PDCCH according to these DRX parameters, that is, the terminal device may determine T₁ and T₂ according to these parameters.

The time period T₁ may be determined by a turned-on time which may be referred to as the on duration time, and this time period is a time period during which the terminal device monitors the downlink PDCCH and the terminal device is in the awake state. The time period T₂ may also be referred to as Opportunity for DRX, during which the terminal device goes into the sleep state and does not monitor the PDCCH for power saving. T₁ and T₂ form one DRX cycle, and the DRX cycle may be a short DRX cycle or a long DRX cycle. The network device can configure the short cycle or the long cycle for the terminal device according to different service scenarios, respectively. If both the short cycle and the long cycle are configured at the same time, if the downlink PDCCH is not monitored within a certain time length, the terminal device enters the long DRX cycle from the short DRX cycle.

If the terminal device successfully decodes the PDCCH in the On Duration Time, the terminal device may start a DRX Inactivity Timer, and continue to monitor the PDCCH within the duration of the timer, i.e., the inactivity time, until the DRX-Inactivity Timer expires.

However, in the 5G system, a plurality of numerologies may be used for data transmission, for example, different subcarrier spacing is used for data transmissions, which may cause the time-frequency resources for the terminal device to monitor the PDCCH may be constantly changed, and the old DRX mode cannot meet the data monitoring requirement of the terminal device. Therefore, a more flexible DRX scheme is urgently needed to meet the low power consumption requirement and the signal monitoring requirement of the terminal device when performing data transmission based on different numerologies.

The embodiments of the present disclosure provide a method for determining the target time-frequency resource for monitoring the control channel based on a plurality of sets of DRX parameters, so that the terminal device can simultaneously meet the low power consumption requirement and the signal monitoring requirement when performing data transmission based on different numerologies.

FIG. 3 is a schematic flow chart of a discontinuous reception method 300 of an embodiment of the present disclosure, which may be performed by a terminal device. The terminal may be, for example, the terminal device 20 shown in FIG. 1. As shown in FIG. 3, the discontinuous reception method includes the following steps:

In step 310, the terminal device determines at least one set of DRX parameters.

Specifically, the network device may configure one or more sets of DRX parameters for the terminal device. When the network device configures multiple sets of DRX parameters for the terminal device, the terminal device may determine at least one set of DRX parameters from the multiple sets of DRX parameters.

Optionally, each set of DRX parameters in the at least one set of DRX parameters include at least one of the following parameters: an on duration time, an inactivity time, a retransmission time, a short DRX cycle, a long DRX cycle, and a frequency monitoring range (FMR), wherein the frequency monitoring range represents a range of a frequency domain resource for monitoring the control channel.

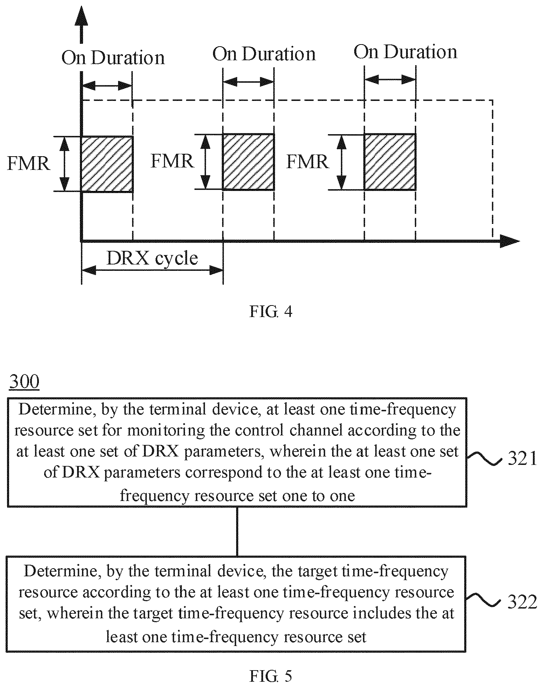

Specifically, the DRX parameters in each set of DRX parameters may determine a time-frequency resource set for monitoring the control channel used by the terminal device. Fig. 4 shows a schematic diagram of time-frequency resources for monitoring a control channel determined by a set of DRX parameters. The terminal device monitors the control channel at the time-frequency resource positions indicated by the shadow portions in FIG. 4, and the time-frequency resources indicated by shadow regions are distributed according to a certain DRX cycle. The DRX cycle may be a short DRX cycle or a long DRX cycle. Only three cycles are shown in FIG. 4, for example.

In this embodiment, the terminal device may monitor the control channel only within a preset frequency domain resource range instead of monitoring the control channel on the full frequency band. Thus, this embodiment can flexibly adapt signal transmission based on different numerologies, such as different subcarrier spacing, and meanwhile the monitoring complexity for the terminal device is reduced.

Optionally, each set of DRX parameters include one or more frequency monitoring ranges, and the monitoring ranges are discontinuous in frequency domain.

One FMR is shown in FIG. 4, but one or more FMR parameters may be included in each set of DRX parameters. Further, if a set of DRX parameters includes multiple FMR parameters, the positions of the frequency domain resources indicated by the multiple FMR parameters may discontinuous in the frequency domain, and the sizes of the frequency domain resources indicated by the multiple FMR parameters may also be the same or different. The present disclosure does not impose specific limitations on this.

In the embodiments of the present disclosure, the terminal device may determine the at least one set of DRX parameters in any one of the following two manners.

### Manner 1

Optionally, determining, by the terminal device, at least one set of DRX parameters includes: determining, by the terminal device, the at least one set of DRX parameters corresponding to at least one numerology according to at least one used numerology and a correspondence between multiple numerologies and multiple sets of DRX parameters.

Specifically, each set of DRX parameters may determine a time-frequency resources set for monitoring the control channel used by the terminal device, so as to meet the requirement of performing DRX transmission based on a certain numerology by the terminal device. But, since the terminal device in the 5G system may use multiple numerologies to perform transmission of control signals or data with the network device, the terminal device may determine the at least one set of DRX parameters corresponding to at least one numerology according to the at least one numerology used by the terminal device and a correspondence between multiple numerologies and multiple sets of DRX parameters. In this way, the terminal can determine the target time-frequency resource finally used for monitoring the control channel according to the at least one set of DRX parameters.

It should be understood that the correspondence between multiple numerologies and multiple sets of DRX parameters may be presented in the form of a table, a formula, an image, and so on. In the correspondence, one numerology may correspond to one or more sets of DRX parameters, and one set of DRX parameters may correspond to one or more numerologies. That is, the terminal device may determine at least one set of DRX parameters corresponding to the at least one numerology by searching a preset table which includes the correspondence between the multiple numerologies and the multiple sets of DRX parameters. Or, the terminal device can calculate the identification or number of at least one set of DRX parameters corresponding to the at least one numerology through a preset formula and the relevant parameter information of the numerology. The present disclosure does not impose specific limitation on this.

### Manner 2

Optionally, determining, by the terminal device, at least one set of DRX parameters includes: receiving, by the terminal device, indication information sent by a network device, wherein the indication information is used for indicating the at least one set of DRX parameters.

Optionally, the indication information is a medium access control element (MAC CE) or downlink control information (DCI).

In 320, the terminal device determines a target time-frequency resource for sending the control channel according to the at least one set of DRX parameters.

Specifically, each set of DRX parameters may determine, for example, a time-frequency resource set for monitoring the control channel as shown in FIG. 3, and after the terminal device selects at least one set of DRX parameters, the terminal device may determine at least one time-frequency resource set for monitoring the control channel corresponding to the at least one set of DRX parameters, and determine a target time-frequency resource for monitoring the control channel finally according to the at least one time-frequency resource set.

In the embodiments of the present disclosure, monitoring the control channel may also be referred to as monitoring a control channel region, monitoring a control channel sub-frame, or the like, and the control channel region includes at least one control channel, for example, at least one PDCCH.

Optionally, as shown in FIG. 5, 320 may include 321 and 322, and 321 and step 322 describe one possible implementation manner of how the terminal device determines the target time-frequency resource according to the at least one set of DRX parameters.

In 321, the terminal device determines at least one time-frequency resource set for monitoring the control channel according to the at least one set of DRX parameters, wherein the at least one set of DRX parameters correspond to the at least one time-frequency resource set one to one.

In 322, the terminal device determines the target time-frequency resource according to the at least one time-frequency resource set, wherein the target time-frequency resource includes the at least one time-frequency resource set.

Specifically, after selecting at least one set of DRX parameters, the terminal device determines at least one time-frequency resource set for monitoring the control channel according to the at least one set of DRX parameters, and determines the target time-frequency resource for monitoring the control channel according to the at least one time-frequency resource set. The target time-frequency resource includes the at least one time-frequency resource. In other words, the target time-frequency resource is a union of the at least one time-frequency resource.

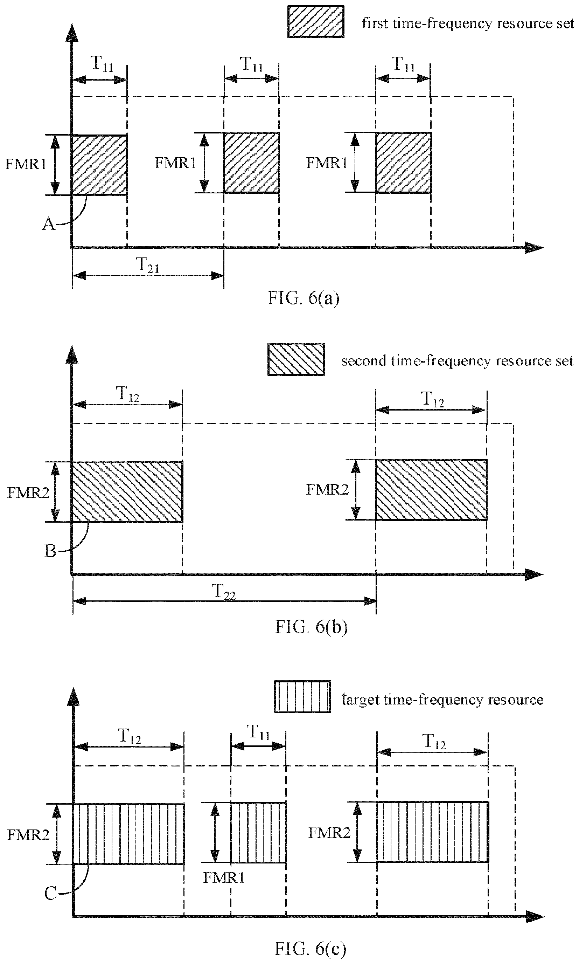

For example, FIG. 6 (a) to FIG. 6 (c) show schematic diagrams of the target time-frequency resource determined according to two sets of DRX parameters. FIG. 6 (a) shows a first time-frequency resources set for monitoring the control channel determined by the terminal device according to a first set of DRX parameters. The first set of DRX parameters includes a first on duration time T₁₁, a first frequency monitoring range FMR1, and a DRX cycle T₂₁. FIG. 6 (b) shows a second time-frequency resource set for monitoring the control channel determined by the terminal device according to a second set of DRX parameters. The second set of DRX parameters includes a first on duration time T₁₂, a first frequency monitoring range FMR2, and a DRX cycle T₂₂, where T₁₁ < T₁₂, FMR1= FMR2, T₂₁ < T₂₂. FIG. 6 (c) shows the target time-frequency resource determined by the terminal device according to the first time-frequency resource set and the second time-frequency resource set. It can be seen that the target time-frequency resource includes the first time-frequency resource set and the second time-frequency resource set.

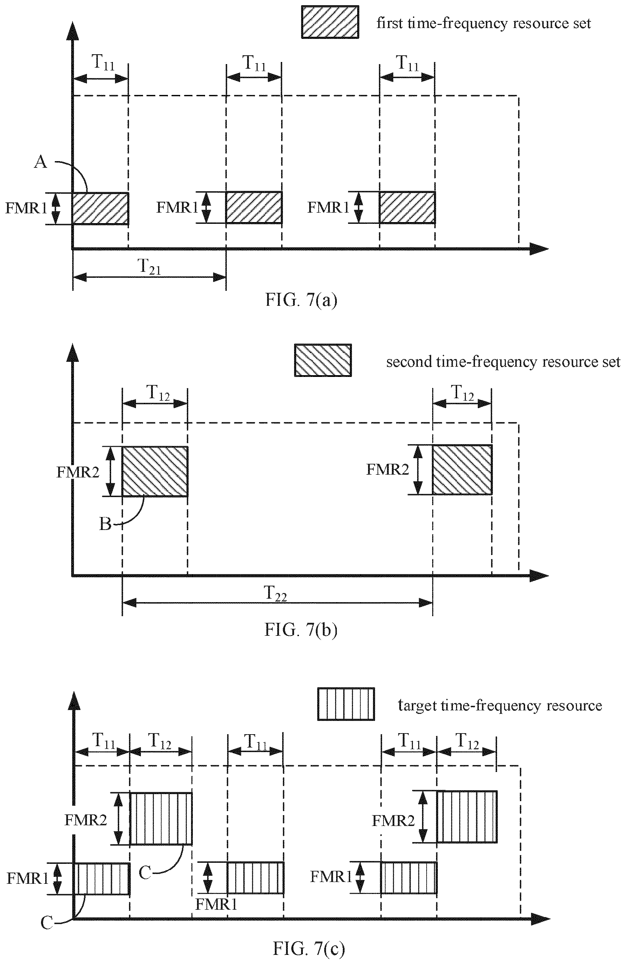

For another example, FIG. 7(a) to FIG. 7(c) show schematic diagrams of the target time-frequency resource determined according to two sets of DRX parameters. FIG. 7(a) shows a first time-frequency resources set for monitoring the control channel determined by the terminal device according to a first set of DRX parameters. The first set of DRX parameters includes a first on duration time T₁₁, a first frequency monitoring range FMR1, and a DRX cycle T₂₁. FIG. 7(b) shows a second time-frequency resource set for monitoring the control channel determined by the terminal device according to a second set of DRX parameters. The second set of DRX parameters includes a first on duration time T₁₂, a first frequency monitoring range FMR2, and a DRX cycle T₂₂, where T₁₁ < T₁₂, FMR1≠ FMR2 (the size and position of the frequency domain resources represented by FMR1 and FMR2 are different), T₂₁ < T₂₂. FIG. 7(c) shows the target time-frequency resource determined by the terminal device according to the first time-frequency resource set and the second time-frequency resource set. It can be seen that the target time-frequency resource includes the first time-frequency resource set and the second time-frequency resource set.

Further, optionally, in the at least one time-frequency resource set, if a time-domain resource range of a first time-frequency resource in a first time-frequency resource set includes a time-domain resource range of a second time-frequency resource in a second time-frequency resource set, the time-domain resource range of the second time-frequency resource is adjusted to the time-domain resource range of the first time-frequency resource.

That is, when the time domain resource ranges of different time-frequency resources in different time-frequency resource sets completely overlap, the smaller time domain resource range should be adjusted to be equal to the larger time domain resource range, i.e., the time domain resource range is determined by the larger time domain resource range.

For example, as shown in FIG. 6(a) to FIG. 6(c), when the time-frequency resource A in FIG. 6(a) overlaps with the time-frequency resource B in FIG. 6(b), the time-frequency resource C in FIG. 6(c) includes the time-frequency resource A (the frequency domain range is equal to FMR1, and the time domain range is also equal to T₁₂) and the time-frequency resource B (the frequency domain range is equal to FMR2, and the time domain range is equal to T₁₂). Here, the time domain resource range of the time-frequency resource C is equal to the larger T₁₂.

When the time domain resource ranges of different time-frequency resources in different time-frequency resource sets do not overlap or partially overlap, the time domain resource ranges of these different time-frequency resources included in the target time-frequency resource are unchanged. For example, as shown in FIG. 7(a) to FIG. 7(c), the time-frequency resource A in FIG. 7(a) does not overlap with the time-frequency resource B in FIG. 7(b), the time-frequency resource C in FIG. 7(c) includes the time-frequency resource A (the frequency domain range is equal to FMR1, and the time domain range is equal to T₁₁) and the time-frequency resource B (the frequency domain range is equal to FMR2, and the time domain range is equal to T₁₂).

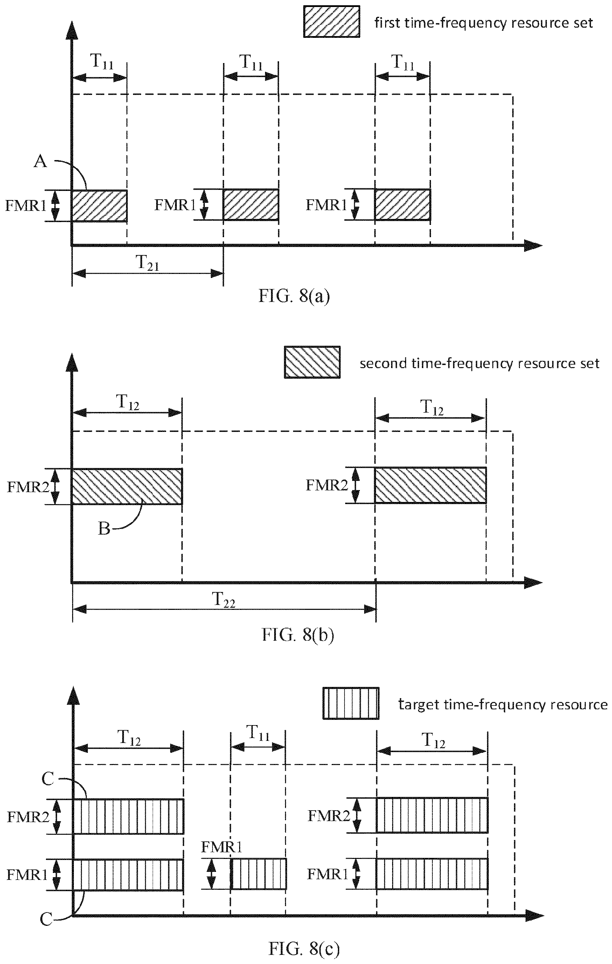

For another example, FIG. 8(a) to FIG. 8(c) show schematic diagrams of the target time-frequency resource determined according to two sets of DRX parameters. FIG. 8(a) shows a first time-frequency resources set for monitoring the control channel determined by the terminal device according to a first set of DRX parameters. The first set of DRX parameters includes a first on duration time T₁₁, a first frequency monitoring range FMR1, and a DRX cycle T₂₁. FIG. 8(b) shows a second time-frequency resource set for monitoring the control channel determined by the terminal device according to a second set of DRX parameters. The second set of DRX parameters includes a first on duration time T₁₂, a first frequency monitoring range FMR2, and a DRX cycle T₂₂, where T₁₁ < T₁₂, FMR1≠ FMR2 (the sizes of the frequency domain resources represented by FMR1 and FMR2 are the same, and the positions of the frequency domain resources represented by FMR1 and FMR2 are different), T₂₁ < T₂₂. FIG. 8(c) shows the target time-frequency resource determined by the terminal device according to the first time-frequency resource set and the second time-frequency resource set. It can be seen that when the time-frequency resource A in FIG. 8(a) does not overlap with the time-frequency resource B in FIG. 8(b), the time-frequency resource C in FIG. 8(c) includes the time-frequency resource A (the frequency domain range is equal to FMR1, and the time domain range is also equal to T₁₂) and the time-frequency resource B (the frequency domain range is equal to FMR2, and the time domain range is equal to T₁₂). Here, the time domain resource range of the time-frequency resource C is equal to the larger T₁₂.

In 330, the terminal device monitors the control channel on the target time-frequency resource.

The terminal device monitors the control channel such as PDCCH on the target time-frequency resource, and does not monitor the control channel within other time periods, thereby achieving the purpose of saving power.

According to the DRX method of the embodiments of the present disclosure, the terminal device determines the target time-frequency resource for monitoring the control channel based on a plurality of sets of DRX parameters together, so that the terminal device can meet both the low power consumption requirement and the signal monitoring requirement when performing data transmission based on different numerologies.

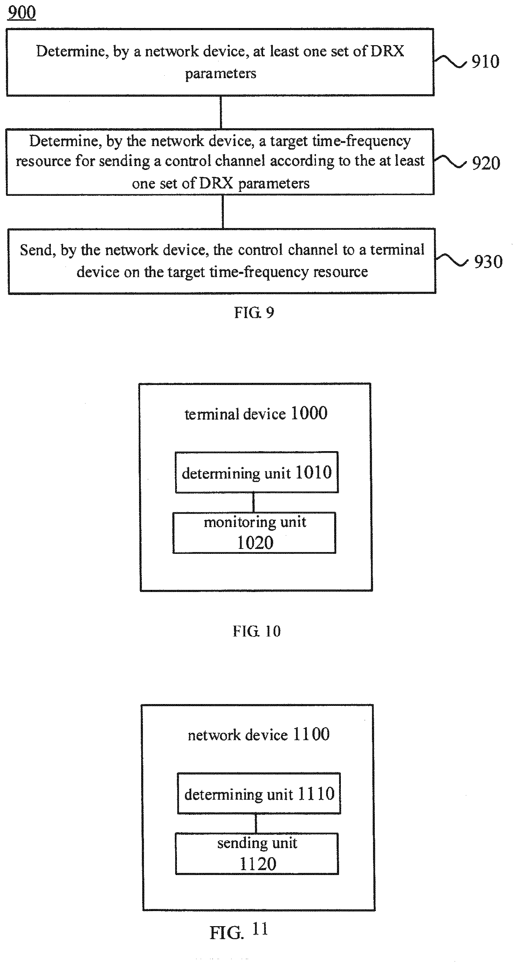

FIG. 9 is a schematic flow chart of a discontinuous reception method 900 of an embodiment of the present disclosure, which may be performed by a network device. The network device may be, for example, the network device 10 shown in FIG. 1. As shown in FIG. 9, the discontinuous reception method includes the following steps:

In 910, the network device determines at least one set of DRX parameters.

Optionally, each set of DRX parameters in the at least one set of DRX parameters include at least one of the following parameters: an on duration time, an inactivity time, a retransmission time, a short DRX cycle, a long DRX cycle, and a frequency monitoring range (FMR), wherein the frequency monitoring range represents a range of a frequency domain resource for monitoring the control channel.

Optionally, each set of DRX parameters includes one or more frequency monitoring ranges, and the frequency monitoring ranges are discontinuous in frequency domain.

In 920, the network device determines a target time-frequency resource for sending the control channel according to the at least one set of DRX parameters.

Optionally, determining by the network device a target time-frequency resource for sending a control channel according to the at least one set of DRX parameters includes: determining, by the network device, at least one time-frequency resource set for sending the control channel according to the at least one set of DRX parameters, wherein the at least one set of DRX parameters correspond to the at least one time-frequency resource set one to one; and determining, by the network device, the target time-frequency resource according to the at least one time-frequency resource set, wherein the target time-frequency resource includes the at least one time-frequency resource set.

Further, optionally, in the at least one time-frequency resource set, if a time-domain resource range of a first time-frequency resource in a first time-frequency resource set includes a time-domain resource range of a second time-frequency resource in a second time-frequency resource set, the time-domain resource range of the second time-frequency resource is adjusted to the time-domain resource range of the first time-frequency resource.

That is, when the time domain resource ranges of different time-frequency resources in different time-frequency resource sets completely overlap, the smaller time domain resource range should be adjusted to be equal to the larger time domain resource range, i.e., the time domain resource range is based on the larger time domain resource range.

For example, FIG. 8(a) to FIG. 8(c) show schematic diagrams of the target time-frequency resource determined according to two sets of DRX parameters. FIG. 8(a) shows a first time-frequency resources set for monitoring the control channel determined by the terminal device according to a first set of DRX parameters. The first set of DRX parameters includes a first on duration time T₁₁, a first frequency monitoring range FMR1, and a DRX cycle T₂₁. FIG. 8(b) shows a second time-frequency resource set for monitoring the control channel determined by the terminal device according to a second set of DRX parameters. The second set of DRX parameters includes a first on duration time T₁₂, a first frequency monitoring range FMR2, and a DRX cycle T₂₂, where T₁₁ < T₁₂, FMR1= FMR2, T₂₁ < T₂₂. FIG. 8(c) shows the target time-frequency resource determined by the terminal device according to the first time-frequency resource set and the second time-frequency resource set. It can be seen that when the time-frequency resource A in FIG. 8(a) overlaps with the time-frequency resource B in FIG. 8(b), the time-frequency resource C in FIG. 8(c) includes the time-frequency resource A (the frequency domain range is equal to FMR1, and the time domain range is also equal to T₁₂) and the time-frequency resource B (the frequency domain range is equal to FMR2, and the time domain range is equal to T₁₂). Here, the time domain resource range of the time-frequency resource C is equal to the larger T₁₂.

It should be understood that the process of determining the target time-frequency resource by the network device may specifically refer to the description of the process of determining the target time-frequency resource by the terminal device in FIG. 3, which is not described herein for brevity.

In 930, the network device sends the control channel to the terminal device on the target time-frequency resource.

According to the DRX method of the embodiments of the present disclosure, the network device determines the target time-frequency resource for sending the control channel based on a plurality of sets of DRX parameters together, so that the terminal device can correctly monitor the control channel according to the plurality of sets of DRX parameters, and meet both the low power consumption requirement and the signal monitoring requirement when performing data transmission based on different numerologies.

It should be understood that, in various embodiments of the present disclosure, the sequence numbers of the above-mentioned processes do not mean the order of execution, and the execution order of the processes should be determined by their functions and internal logics, and should not constitute any limitation on the implementation processes of the embodiments of the present disclosure.

FIG. 10 is a schematic block diagram of a terminal device 1000 according to an embodiment of the present disclosure. As shown in FIG. 10, the terminal device 1000 includes a determining unit 1010 and a monitoring unit 1020.

The determining unit 1010 is configured to determine at least one set of DRX parameters.

The determining unit 1010 is further configured to determine a target time-frequency resource for monitoring a control channel according to the at least one set of DRX parameters.

The monitoring unit 1020 is configured to monitor the control channel on the target time-frequency resource determined by the determining unit 1010.

Therefore, the terminal device determines the target time-frequency resource for monitoring the control channel based on a plurality of sets of DRX parameters together, so that the terminal device can simultaneously meet both the low power consumption requirement and the signal monitoring requirement when performing data transmission based on different numerologies.

Optionally, the determining unit 1010 is configured to: determine at least one time-frequency resource set for monitoring the control channel according to the at least one set of DRX parameters, wherein the at least one set of DRX parameters correspond to the at least one time-frequency resource set one to one; and determine the target time-frequency resource according to the at least one time-frequency resource set, wherein the target time-frequency resource includes the at least one time-frequency resource set.

Optionally, in the at least one time-frequency resource set, if a time-domain resource range of a first time-frequency resource in a first time-frequency resource set includes a time-domain resource range of a second time-frequency resource in a second time-frequency resource set, the time-domain resource range of the second time-frequency resource is adjusted to the time-domain resource range of the first time-frequency resource.

Optionally, each set of DRX parameters in the at least one set of DRX parameters include at least one of the following parameters: an on duration time, an inactivity time, a retransmission time, a short DRX cycle, a long DRX cycle and a frequency monitoring range, wherein the frequency monitoring range represents a range of a frequency domain resource for monitoring the control channel.

Optionally, each set of DRX parameters includes one or more frequency monitoring ranges, and a plurality of frequency monitoring ranges are discontinuous in frequency domain.

Optionally, determining by the terminal device at least one set of DRX parameters includes: determining the at least one set of DRX parameters corresponding to at least one numerology according to at least one used numerology and a correspondence between multiple numerologies and multiple sets of DRX parameters.

Optionally, the determining unit 1010 is configured to: receive indication information sent by a network device, wherein the indication information is used for indicating the at least one set of DRX parameters.

Optionally, the indication information is a medium access control element (MAC CE) or downlink control information (DCI).

FIG. 11 is a schematic block diagram of a network device 1100 according to an embodiment of the present disclosure. As shown in FIG. 11, the network device 1100 includes a determining unit 1110 and a sending unit 1120.

The determining unit 1110 is configured to determine at least one set of DRX parameters.

The determining unit 1110 is further configured to determine a target time-frequency resource for sending a control channel according to the at least one set of DRX parameters.

The sending unit 1120 is configured to send the control channel to a terminal device on the target time-frequency resource determined by the determining unit 1110.

Therefore, the network device determines the target time-frequency resource for sending the control channel based on a plurality of sets of DRX parameters together, so that the terminal device can correctly monitor the control channel according to the plurality of sets of DRX parameters, and simultaneously meet the low power consumption requirement and the signal monitoring requirement when performing data transmission based on different numerologies.

Optionally, the determining unit 1110 is configured to: determine at least one time-frequency resource set for sending the control channel according to the at least one set of DRX parameters, wherein the at least one set of DRX parameters corresponds to the at least one time-frequency resource set one to one; and determine the target time-frequency resource according to the at least one time-frequency resource set, wherein the target time-frequency resource includes the at least one time-frequency resource set.

Optionally, in the at least one time-frequency resource set, if a time-domain resource range of a first time-frequency resource in a first time-frequency resource set includes a time-domain resource range of a second time-frequency resource in a second time-frequency resource set, the time-domain resource range of the second time-frequency resource is adjusted to the time-domain resource range of the first time-frequency resource.

Optionally, each set of DRX parameters in the at least one set of DRX parameters includes at least one of the following parameters: an on duration time, an inactivity time, a retransmission time, a short DRX cycle, a long DRX cycle and a frequency monitoring range, wherein the frequency monitoring range represents a range of a frequency domain resource for monitoring the control channel.

Optionally, each set of DRX parameters includes one or more frequency monitoring ranges, and a plurality of frequency monitoring ranges are discontinuous in frequency domain.

Optionally, the determining unit 1110 is configured to: determine the at least one set of DRX parameters corresponding to at least one numerology according to at least one used numerology and a correspondence between multiple numerologies and multiple sets of DRX parameters.

Optionally, the sending unit 1120 is further configured to: send indication information to the terminal device, wherein the indication information is used for indicating the at least one set of DRX parameters.

Optionally, the indication information is a medium access control element (MAC CE) or downlink control information (DCI).

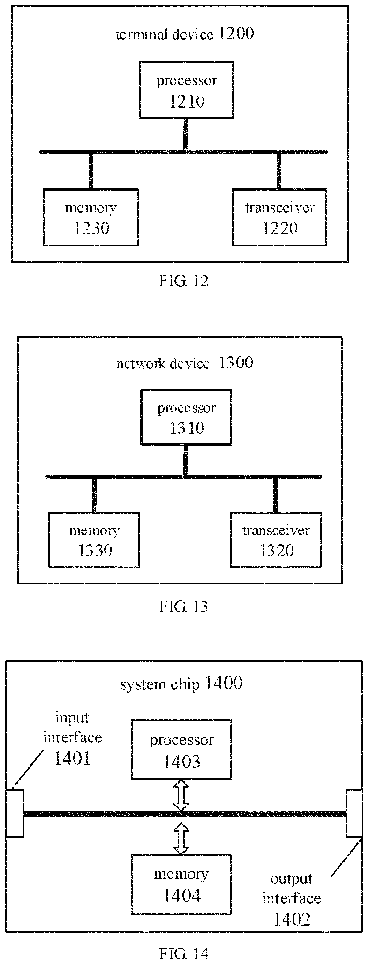

FIG. 12 is a schematic structural diagram of a terminal device 1200 according to an embodiment of the present disclosure. As shown in FIG. 12, the terminal device includes a processor 1210, a transceiver 1220 and a memory 1230. The processor 1210, the transceiver 1220 and the memory 1230 communicate with each other through an internal connection path. The memory 1230 stores instructions, and the processor 1210 is configured to execute the instructions stored in the memory 1230 to control the transceiver 1220 to receive signals or send signals.

The processor 1210 is configured to: determine at least one set of DRX parameters; and determine a target time-frequency resource for monitoring a control channel according to the at least one set of DRX parameter.

The processor 1210 is further configured to: monitor the control channel on the target time-frequency resource by transceiver 1220.

Optionally, the processor 1210 is configured to: determine at least one time-frequency resource set for monitoring the control channel according to the at least one set of DRX parameters, wherein the at least one set of DRX parameters correspond to the at least one time-frequency resource set one to one; and determine the target time-frequency resource according to the at least one time-frequency resource set, wherein the target time-frequency resource includes the at least one time-frequency resource set.

Optionally, in the at least one time-frequency resource set, if a time-domain resource range of a first time-frequency resource in a first time-frequency resource set includes a time-domain resource range of a second time-frequency resource in a second time-frequency resource set, the time-domain resource range of the second time-frequency resource is adjusted to the time-domain resource range of the first time-frequency resource.

Optionally, each set of DRX parameters in the at least one set of DRX parameters includes at least one of the following parameters: an on duration time, an inactivity time, a retransmission time, a short DRX cycle, a long DRX cycle and a frequency monitoring range, wherein the frequency monitoring range represents a range of a frequency domain resource for monitoring the control channel.

Optionally, each set of DRX parameters includes one or more frequency monitoring ranges, and the frequency monitoring ranges are discontinuous in frequency domain.

Optionally, determining, by the terminal device, at least one set of DRX parameters includes: determining the at least one set of DRX parameters corresponding to at least one numerology according to at least one used numerology and a correspondence between multiple numerologies and multiple sets of DRX parameters.

Optionally, the processor 1210 is configured to: receive indication information sent by the network device through the transceiver 1220, and determine the at least one set of DRX parameters according to the indication information, wherein the indication information is used for indicating the at least one set of DRX parameters.

Optionally, the indication information is a medium access control element (MAC CE) or downlink control information (DCI).

It should be understood that in the embodiment of the present disclosure, the processor 1210 may be a central processing unit (CPU), and the processor 1210 can also be general purpose processors, digital signal processors (DSPs), application specific integrated circuits (ASICs), field programmable gate arrays (FPGAs) or other programmable logic devices, discrete gates or transistor logic devices, discrete hardware components, and so on. The general purpose processor may be a microprocessor can also be any conventional processor, and so on.

The memory 1230 may include a read only memory and a random access memory and provides instructions and data to the processor 1210. A portion of the memory 1230 may also include a non-volatile random access memory. For example, the memory 1230 can also store information of the device type.

In the implementation, each step of the foregoing method may be completed by an integrated logic circuit of hardware in the processor 1210 or an instruction in a form of software. The steps of the methods disclosed in the embodiments of the present disclosure may be directly implemented by the hardware processor, or may be performed by a combination of hardware and software modules in the processor 1210. The software modules can be located in a conventional storage medium such as a random access memory, a flash memory, a read only memory, a programmable read only memory or an electrically erasable programmable memory, a register, and the like. The storage medium is located in the memory 1230, and the processor 1210 reads the information in the memory 1230 and completes the steps of the above methods with its hardware. To avoid repetition, it will not be described in detail here.

The terminal device 1200 according to the embodiment of the present disclosure may correspond to the terminal device used to execute the method 300 in the method 300 described above and the terminal device 1000 according to the embodiment of the present disclosure, and each unit or module in the terminal device 1200 is configured to execute each action or process executed by the terminal device in the method 300 described above, and a repeated description thereof is omitted here.

FIG. 13 is a schematic structural diagram of a network device 1300 according to an embodiment of the present disclosure. As shown in FIG. 13, the network device includes a processor 1310, a transceiver 1320 and a memory 1330. The processor 1310, the transceiver 1320 and the memory 1330 communicate with each other through an internal connection path. The memory 1330 stores instructions, and the processor 1310 is configured to execute the instructions stored in the memory 1330 to control the transceiver 1320 to receive signals or send signals.

The processor 1310 is configured to: determine at least one set of DRX parameters; and determine a target time-frequency resource for sending a control channel according to the at least one set of DRX parameters.

The transceiver 1320 is configured to send the control channel to a terminal device on the target time-frequency resource determined by the processor 1310.

Optionally, in the at least one time-frequency resource set, if a time-domain resource range of a first time-frequency resource in a first time-frequency resource set includes a time-domain resource range of a second time-frequency resource in a second time-frequency resource set, the time-domain resource range of the second time-frequency resource is adjusted to the time-domain resource range of the first time-frequency resource.

Optionally, each set of DRX parameters in the at least one set of DRX parameters includes at least one of the following parameters: an on duration time, an inactivity time, a retransmission time, a short DRX cycle, a long DRX cycle and a frequency monitoring range, wherein the frequency monitoring range represents a range of a frequency domain resource for monitoring the control channel.

Optionally, each set of DRX parameters includes one or more frequency monitoring ranges, and a plurality of frequency monitoring ranges are discontinuous a frequency domain.

Optionally, the processor 1310 is configured to: determine the at least one set of DRX parameters corresponding to at least one numerology according to at least one used numerology and a correspondence between multiple numerologies and multiple sets of DRX parameters.

Optionally, the transceiver 1320 is further configured to: send indication information to the terminal device, wherein the indication information is used for indicating the at least one set of DRX parameters.

Optionally, the indication information is a medium access control element (MAC CE) or downlink control information (DCI).

It should be understood that in the embodiment of the present disclosure, the processor 1310 may be a central processing unit (CPU), and the processor 1310 can also be general purpose processors, digital signal processors (DSPs), application specific integrated circuits (ASICs), field programmable gate arrays (FPGAs) or other programmable logic devices, discrete gates or transistor logic devices, discrete hardware components, and so on. The general purpose processor may be a microprocessor can also be any conventional processor, and so on.

The memory 1330 may include a read only memory and a random access memory and provides instructions and data to the processor 1310. A portion of the memory 1330 may also include a non-volatile random access memory. For example, the memory 1330 can also store information of the device type.

In the implementation, each step of the foregoing methods may be completed by an integrated logic circuit of hardware in the processor 1310 or an instruction in a form of software. The steps of the methods disclosed in the embodiments of the present disclosure may be directly implemented by the hardware processor, or may be performed by a combination of hardware and software modules in the processor 1310. The software module can be located in a conventional storage medium such as a random access memory, a flash memory, a read only memory, a programmable read only memory or an electrically erasable programmable memory, a register, and the like. The storage medium is located in the memory 1330, and the processor 1310 reads the information in the memory 1330 and completes the steps of the above methods with its hardware. Repeated description will be omitted here.

The network device 1300 according to the embodiment of the present disclosure may correspond to the terminal device used to execute the method 900 in the method 900 described above and the network device 1100 according to the embodiment of the present disclosure, and each unit or module in the network device 1300 is configured to execute each action or process executed by the terminal device in the method 900 described above, and a repeated description thereof is omitted here.

FIG. 14 is a schematic structural diagram of a system chip of an embodiment of the present disclosure. The system chip 1400 of FIG. 14 includes an input interface 1401, an output interface 1402, at least one processor 1403, and a memory 1404, which are connected to each other through an internal connection path. The processor 1403 is configured to execute the codes in the memory 1404.

Optionally, when the codes are executed, the processor 1403 may implement the method 300 executed by the terminal device in the method embodiments. For the sake of brevity, repeated descriptions are omitted here.

Optionally, when the codes are executed, the processor 1403 may implement the method 900 performed by the network device in the method embodiments. For the sake of brevity, repeated descriptions are omitted here.

Those of ordinary skill in the art will appreciate that the exemplary units and algorithm steps described according to the embodiments disclosed herein can be carried out by electronic hardware or a combination of electronic hardware and computer software. Whether the functions are implemented by hardware or software depends on particular applications and design constraints of the technical solutions. For each of the particular applications, a person skilled in the art can use different methods to implement the described functions, but such implementation should not be considered as beyond the scope of the present disclosure.

It may be clearly understood by those skilled in the art that details of specific operation procedures of the systems, devices and units can be found in the previous description regarding the method embodiments.

In the embodiments provided in the present disclosure, it should be understood that the disclosed systems, devices and methods may be implemented in other ways. For example, the device embodiments described above are merely illustrative. For example, the division of the units is only a kind of logical function division. In practice, other division manner may be used. For example, multiple units or components may be combined or integrated into another system, or some features may be ignored or not performed. In addition, the illustrated or discussed mutual coupling or direct coupling or communication connection may be indirect coupling or communication connection through some interfaces, devices or units, and may be in electrical, mechanical or other forms.

The units described as separated parts may or may not be physically separated, and the parts displayed as units may or may not be physical units, that is, the units may be located in one place, or may be distributed over multiple network units. Some or all of the units may be selected according to actual needs to achieve the objectives of the solutions in the embodiments.

In addition, the functional units in the embodiments of the present disclosure may be integrated in one monitoring unit, or the units may exist alone physically, or two or more units may be integrated in one unit.

The functions may also be stored in a computer-readable storage medium if being implemented in the form of a software functional unit and sold or used as an independent product. Based on such understanding, the essence of the technical solutions of the present disclosure, or the part contributing to the prior art or part of the technical solutions, may be embodied in the form of a software product. The computer software product is stored in a storage medium including a number of instructions such that a computer device (which may be a personal computer, a server, or a network device, etc.) performs all or part of steps of the method described in each of the embodiments of the present disclosure. The foregoing storage medium includes: any medium that is capable of storing program codes such as a USB disk, a mobile hard disk, a Read-Only Memory (ROM), a Random Access Memory (RAM), a magnetic disk or an optical disk, and the like.

The foregoing descriptions are merely exemplary embodiments of the present disclosure, but the protection scope of the present disclosure is not limited thereto. Any person skilled in the art can easily think of changes or substitutions within the technical scope of the present disclosure, and all the changes or substitutions should be covered by the protection scope of the present disclosure. Therefore, the protection scope of the present disclosure should be defied by the appended claims.

## Claims

1. A discontinuous reception DRX method, comprising:
determining, by a terminal device, at least one set of DRX parameters;
determining, by the terminal device, a target time-frequency resource for monitoring a control channel according to the at least one set of DRX parameters; and
monitoring, by the terminal device, the control channel on the target time-frequency resource.

2. The method of claim 1, wherein determining, by the terminal device, a target time-frequency resource for monitoring a control channel according to the at least one set of DRX parameters comprises:
determining, by the terminal device, at least one time-frequency resource set for monitoring the control channel according to the at least one set of DRX parameters, wherein the at least one set of DRX parameters correspond to the at least one time-frequency resource set one to one; and
determining, by the terminal device, the target time-frequency resource according to the at least one time-frequency resource set, wherein the target time-frequency resource comprises the at least one time-frequency resource set.

3. The method of claim 2, wherein in the at least one time-frequency resource set, if a time-domain resource range of a first time-frequency resource in a first time-frequency resource set comprises a time-domain resource range of a second time-frequency resource in a second time-frequency resource set, the time-domain resource range of the second time-frequency resource is adjusted to the time-domain resource range of the first time-frequency resource.

4. The method of any one of claims 1 to 3, wherein each set of DRX parameters in the at least one set of DRX parameters comprise at least one of the following parameters:
an on duration time, an inactivity time, a retransmission time, a short DRX cycle, a long DRX cycle and a frequency monitoring range, wherein the frequency monitoring range represents a range of a frequency domain resource for monitoring the control channel.

5. The method of claim 4, wherein each set of DRX parameters comprise one or more frequency monitoring ranges, and the frequency monitoring ranges are discontinuous in frequency domain.

6. The method of any one of claims 1 to 5, wherein determining, by a terminal device, at least one set of DRX parameters comprises:
determining, by the terminal device, at least one set of DRX parameters corresponding to at least one numerology according to at least one used numerology and a correspondence between multiple numerologies and multiple sets of DRX parameters.

7. The method of any one of claims 1 to 6, wherein determining, by a terminal device, at least one set of DRX parameters comprises:
receiving, by the terminal device, indication information sent by a network device, wherein the indication information is used for indicating the at least one set of DRX parameters.

8. The method of claim 7, wherein the indication information is a medium access control element MAC CE or downlink control information DCI.

9. The method of any one of claims 1 to 8, wherein determining, by a terminal device, at least one set of DRX parameters comprises:
determining, by the terminal device, the at least one set of DRX parameters from a plurality of sets of DRX parameters configured by a network device.

10. A discontinuous reception DRX method, comprising:
determining, by a network device, at least one set of DRX parameters;
determining, by the network device, a target time-frequency resource for sending a control channel according to the at least one set of DRX parameters; and
sending, by the network device, the control channel to a terminal device on the target time-frequency resource.

11. The method of claim 10, wherein determining, by the network device, a target time-frequency resource for sending a control channel according to the at least one set of DRX parameters, comprises:
determining, by the network device, at least one time-frequency resource set for sending the control channel according to the at least one set of DRX parameters, wherein the at least one set of DRX parameters correspond to the at least one time-frequency resource set one to one; and
determining, by the network device, the target time-frequency resource according to the at least one time-frequency resource set, wherein the target time-frequency resource comprises the at least one time-frequency resource set.

12. The method of claim 11, wherein in the at least one time-frequency resource set, if a time-domain resource range of a first time-frequency resource in a first time-frequency resource set comprises a time-domain resource range of a second time-frequency resource in a second time-frequency resource set, the time-domain resource range of the second time-frequency resource is adjusted to the time-domain resource range of the first time-frequency resource.

13. The method of any one of claims 10 to 12, wherein each set of DRX parameters in the at least one set of DRX parameters comprise at least one of the following parameters:
an on duration time, an inactivity time, a retransmission time, a short DRX cycle, a long DRX cycle and a frequency monitoring range, wherein the frequency monitoring range represents a range of a frequency domain resource for monitoring the control channel.

14. The method of claim 13, wherein each set of DRX parameters comprise one or more frequency monitoring ranges, and the frequency monitoring ranges are discontinuous in frequency domain.

15. The method of any one of claims 10 to 14, wherein determining, by a network device, at least one set of DRX parameters comprises:
determining, by the network device, the at least one set of DRX parameters corresponding to at least one numerology according to at least one used numerology and a correspondence between multiple numerologies and multiple sets of DRX parameters.

16. The method of any one of claims 10 to 15, further comprising:
sending, by the network device, indication information to the terminal device, wherein the indication information is used for indicating the at least one set of DRX parameters.

17. The method of claim 16, wherein the indication information is a medium access control element (MAC CE) or downlink control information (DCI).

18. The method of any one of claims 10 to 17, wherein determining at least one set of DRX parameters by the network device comprises:
determining, by the network device, the at least one set of DRX parameters from a plurality of sets of configured DRX parameters.

19. A terminal device, comprising:
a determining unit configured to determine at least one set of DRX parameters;
wherein the determining unit is further configured to determine a target time-frequency resource for monitoring a control channel according to the at least one set of DRX parameters; and
a monitoring unit configured to monitor the control channel on the target time-frequency resource determined by the determining unit.

20. The terminal device of claim 19, wherein the determining unit is configured to:
determine at least one time-frequency resource set for monitoring the control channel according to the at least one set of DRX parameters, wherein the at least one set of DRX parameters correspond to the at least one time-frequency resource set one to one; and
determine the target time-frequency resource according to the at least one time-frequency resource set, wherein the target time-frequency resource comprises the at least one time-frequency resource set.

21. The terminal device of claim 20, wherein in the at least one time-frequency resource set, if a time-domain resource range of a first time-frequency resource in a first time-frequency resource set comprises a time-domain resource range of a second time-frequency resource in a second time-frequency resource set, the time-domain resource range of the second time-frequency resource is adjusted to the time-domain resource range of the first time-frequency resource.

22. The terminal device of any one of claims 19 to 21, wherein each set of DRX parameters in the at least one set of DRX parameters comprise at least one of the following parameters:
an on duration time, an inactivity time, a retransmission time, a short DRX cycle, a long DRX cycle and a frequency monitoring range, wherein the frequency monitoring range represents a range of a frequency domain resource for monitoring the control channel.

23. The terminal device of claim 22, wherein each set of DRX parameters comprise one or more frequency monitoring ranges, and the frequency monitoring ranges are discontinuous in frequency domain.

24. The terminal device of any one of claims 19 to 23, wherein determining by the terminal device at least one set of DRX parameters comprises:
determining the at least one set of DRX parameters corresponding to at least one numerology according to at least one used numerology and a correspondence between multiple numerologies and multiple sets of DRX parameters.

25. The terminal device of any one of claims 19 to 24, wherein the determining unit is configured to:
receive indication information sent by a network device, wherein the indication information is used for indicating the at least one set of DRX parameters.

26. The terminal device of claim 25, wherein the indication information is a medium access control element MAC CE or downlink control information DCI.

27. The terminal device of any one of claims 19 to 26, wherein the determining unit is configured to:
determine the at least one set of DRX parameters from a plurality of sets of DRX parameters configured by a network device.

28. A network device, comprising:
a determining unit configured to determine at least one set of DRX parameters;
wherein the determining unit is further configured to determine a target time-frequency resource for sending a control channel according to the at least one set of DRX parameters; and
a sending unit configured to send the control channel to a terminal device on the target time-frequency resource.

29. The network device of claim 28, wherein the determining unit is configured to:
determine at least one time-frequency resource set for sending the control channel according to the at least one set of DRX parameters, wherein the at least one set of DRX parameters correspond to the at least one time-frequency resource set one to one; and
determine the target time-frequency resource according to the at least one time-frequency resource set, wherein the target time-frequency resource comprises the at least one time-frequency resource set.

30. The network device of claim 29, wherein in the at least one time-frequency resource set, if a time-domain resource range of a first time-frequency resource in a first time-frequency resource set comprises a time-domain resource range of a second time-frequency resource in a second time-frequency resource set, the time-domain resource range of the second time-frequency resource is adjusted to the time-domain resource range of the first time-frequency resource.

31. The network device of any one of claims 28 to 30, wherein each set of DRX parameters in the at least one set of DRX parameters comprise at least one of the following parameters:
an on duration time, an inactivity time, a retransmission time, a short DRX cycle, a long DRX cycle and a frequency monitoring range, wherein the frequency monitoring range represents a range of a frequency domain resource for monitoring the control channel.

32. The network device of claim 31, wherein each set of DRX parameters comprise one or more frequency monitoring ranges, and the frequency monitoring ranges are discontinuous in frequency domain.

33. The network device of any one of claims 28 to 32, wherein the determining unit is configured to:
determine the at least one set of DRX parameters corresponding to at least one numerology according to at least one used numerology and a correspondence between multiple numerologies and multiple sets of DRX parameters.

34. The network device of any one of claims 28 to 33, wherein the sending unit is further configured to:
send indication information to the terminal device, wherein the indication information is used for indicating the at least one set of DRX parameters.

35. The network device of claim 34, wherein the indication information is a medium access control element MAC CE or downlink control information DCI.

36. The network device of any one of claims 28 to 35, wherein the determining unit is configured to:
determine the at least one set of DRX parameters from a plurality of sets of configured DRX parameters.
